# EUROPEAN PATENT APPLICATION

(11) **EP 4 446 710 A1**
(43) Date of publication of application: **16.10.2024**
(21) Application number: 23167703.0
(22) Date of filing: 13.04.2023
(51) Int. Cl.: G01G 23/01

(54) **CALIBRATION SYSTEM FOR A WEIGHING SYSTEM**

(71) Applicant: Eilersen Calibration Solutions ApS, 2980 Kokkedal (DK)
(72) Inventor: EILERSEN, Frederik Juul, 2960 Rungsted (DK)
(74) Representative: Dragsted Partners A/S

(57) **Abstract**

A calibration system for a weighing system, where the weighing system comprises a first weighing load cell and a first container configured to hold a first substance to be weighed by the first weighing load cell, the calibration system comprising: a first calibration device comprising a first force actuation part configured to provide a first calibration force in the direction of gravity and a first calibration load cell configured to measure the first calibration force, a base part configured to provide a first counterforce in a direction opposite to the first calibration force applied via the first calibration device, a removeable force application part being connected with the first calibration device and having a force application surface, where the force application part is configured to be aligned with at least a part of the weighing system in order to apply the first calibration force to the first container via the first force application surface and to transfer the first calibration force to the first weighing load cell.

## Description

### Technical Field

A calibration system for a weighing system, where the weighing system comprises a first weighing load cell and a first container configured to hold a first substance to be weighed by the first weighing load cell.

### Description

Tanks or large vessels are often used in manufacturing facilities, such as in the pharmaceutical and food industry, to store ingredients or a mixture of components for production of a product, where the product may be mixtures of two or more components. These storage or mixing vessels are often provided with a weighing system, so that the users of the vessels know how much of the product is present in the vessel, or so that the users can extract a certain amount of product or dose from the tank, and where the weighing system is capable of providing a representation of the amount and/or mass of the extracted product.

The weighing systems are often in the form of one or more load cells, where the load cells are capable of rendering a representation of the force applied to the load cell via the tank, and where the representation may be utilised to add or extract a unit representing a weight or a mass of the tank and/or the contents of the tank. The weighing systems need to be calibrated periodically to ensure that the weighing systems reproduce a correct representation of the mass present inside the container.

There are a number of ways in which such calibrations may be performed. One method of calibrating a tank system may be where the tank is emptied, and where a predefined amount of purified liquid, such as purified water, is used to fill the tank from its empty state to its full state. During the filling, the amount of liquid applied into the vessel is monitored with a flowmeter, so that it is possible to follow the curve of the weighing system from its empty state to its full state, using this data to confirm that the weighing system is operating correctly, or to calibrate the weighing system to the results of the filling of the tank to ensure that future measurements are correct. This calibration technique is very time-consuming and expensive, as the vessel has to be emptied and cleaned prior to the calibration and has to be cleaned subsequently to the calibration to prepare the container for the components that the tank is to receive. Furthermore, when this calibration method is used, the liquid used for the calibration has to be discarded, as the liquid is no longer clean. Thus, this calibration technique may be seen as very time-consuming, wasteful and expensive, as the purified liquid might cost in the vicinity of EUR 1 per litre, and each container may be capable of holding up to 40,000 litres or more. Thus, the cost of the liquid may be a very significant factor during calibration. Furthermore, the time-consuming calibration method using liquid means that the vessel cannot be used for production, which limits the production capacity.

Another method for calibration of the weighing system may be where a tension load cell and a hydraulic piston are attached in series to a tank, and where an opposite end is attached to a foundation. By applying hydraulic force to pull the tank towards the foundation, the tension load cell will indicate the amount of force applied to the tank, and where the output of the weighing system may be compared to the force applied by the hydraulic piston. However, this type of calibration system may be seen as very bulky due to the size of the hydraulic piston and the load cell, which makes it difficult to retrofit this type of system to an existing container, especially when containers are placed close to each other in a manufacturing facility, or where there are numerous process pipes or connections surrounding the containers.

Conventional systems for calibrating a tank may be seen in e.g. WO 2004/088259 or WO 2020/057034. Both of these systems comprise a hydraulic device, where the hydraulic device is in the form of a pull force hydraulic cylinder, where the cylinder housing is attached to the base, and a hydraulic device is adapted to apply a force directly to a load cell either via tension force or compression force. The tanks or vessels are often designed to be able to receive the calibration devices, where the tanks or vessels may have an attachment part which is welded to the tank, where the calibration device is hooked up to the attachment part in order to be capable of applying a force to the weighing system. Thus, the systems may have a permanent fixture that allows for the calibration of the load cells or of the weighing system.

Thus, there is a need to provide a calibration system which may be utilized with any kind of weighing system without the need to modify or adapt any part of the weighing system to the calibration system.

In accordance with the invention, there is provided a calibration system for a weighing system, where the weighing system comprises a first weighing load cell and a first container configured to hold a first substance to be weighed by the first weighing load cell, the calibration system comprising: a first calibration device comprising a first force actuation part configured to provide a first calibration force in the direction of gravity and a first calibration load cell configured to measure the first calibration force, a base part configured to provide a first counterforce in a direction opposite to the first calibration force applied via the first calibration device, a removeable force application part being connected with the first calibration device and having a force application surface, where the force application part is configured to be aligned with at least a part of the weighing system in order to apply the first calibration force to the first container via the first force application surface and to transfer the first calibration force to the first weighing load cell.

The force application surface may be one or more surface areas that are in contact directly or indirectly with the weighing system, or are in contact directly or indirectly with the container or tank of a weighing system. Thus, the first application surface may be in contact with the weighing system in one or more areas, so that the first force application surface may be divided into a plurality of areas that are configured to transfer the first calibration force to the weighing system and/or the container of the weighing system.

By having a removable force application part, it may be possible to introduce the calibration system to the weighing system without having to do any kind of permanent modification on the actual weighing system, other than to apply or mount the calibration system to the weighing system. The force application part may be introduced into the weighing system in a position where the first calibration force is applied to the load cell or the weighing device of the weighing system, and where the calibration load cell registers the magnitude of the first calibration force applied to the weighing system. The calibration load cell may be understood as a reference load cell, where the reference load cell provides a reference of the magnitude of the force applied via the calibration system, which may be used to compare with the magnitude of force registered by the load cells of the weighing system.

A production site for a chemical company relies heavily on the weighing systems when a certain amount of a chemical is needed for a mixture, and it may be very important to provide precise weights of a particular chemical into a mixture, especially within the pharmaceutical industry. The production site may have tens, hundreds, or thousands of identical or different tanks holding different chemicals, where each tank or container has their own weighing system, and where each weighing system has to be calibrated periodically to ensure and document that the weight of the substance is correct every time. If there is any discrepancy, it may have devastating consequences, as the precise amount or weight of a substance may have significant effect on the effectivity, reliability and/or legitimacy of the amount of the dispensed substance and/or the weight of the substance used in a mixture. This may be especially important for the precise dosing of pharmaceutical or chemical products or substances.

By providing a calibration system having a removeable force application part, it may be possible to calibrate each tank of a production site without having to structurally alter a tank or a container for the calibration process. There is no need to weld brackets, coupling eyes or any other types of attachment elements to the tank, as the removeable force application part may be positioned in a suitable position on the tank and/or container, and the force may be applied directly to an existing part of the tank/container in order to transmit the calibration force to the weighing system of the tank/container.

The removable force application part may be connected to the force calibration device, which in turn may be connected to the base, so that when a calibration force is applied by the calibration device to the tank and/or container, the base provides a counterforce in the opposite direction to the calibration force, allowing the force to be transmitted via the container to the weighing load cell of the weighing system. When the calibration has been completed, the removeable force application part may be disconnected from the container or the weighing system, and the weighing system is completely as it was prior to the calibration of the weighing load cells.

Thus, the calibration system may be applied to a second weighing system and/or container, and the calibration process may be repeated on a second weighing system and/or a subsequent weighing system.

Within the context of the present application, the term *"*container*"* used in relation to a weighing system may be a vessel, a receptacle, a tank, a hopper, or any type of device that is capable of holding a substance and possibly dispensing the substance from the device.

Within the context of the present application, the term *"*Base*"* may be understood as any part that can provide a counterforce to a force application part. The base may be a foundation, a floor, a frame of a mobile container, or a separate device that mechanically couples the calibration device to the weighing system to apply a counterforce to the force application part.

The removeable force application part may be in the form of a removeable clamp or a removeable hook that is capable of being applied to the tank directly or indirectly, providing a mechanical connection between an existing part of the container and the calibration device, allowing the calibration part to apply a calibration force to the container.

The removeable force application part may be connected to the first calibration device via a force transfer part, where the force transfer part may be a metal rod, a chain, or a strap, where a first end of the force transfer part is in connection with the force actuation part or the first calibration load cell, allowing a mechanical connection between the first calibration device and the removeable force application part.

Furthermore, the removeable force application part may include a force transfer part and may be directly connected to the calibration part, i.e. the force actuation part or the calibration load cell. The removeable force application part may be in the form of a removeable strap, chain or wires that are directly applied to the tank, and where the strap, chain or wires comprise a force application surface to transfer a force to the container.

The calibration device may be configured to provide a tension force between the force application part and the base, allowing the tension force to be transferred as a compression force to the weighing system, so that the force application part pushes on the weighing device to transfer the force via the container and to the load cell of the weighing device.

In one exemplary embodiment of the present disclosure, the calibration system may comprise a second calibration device. The second calibration device may be utilized to provide a second calibration force to the calibration of the weighing system. The second calibration device may comprise a second calibration load cell and a second force actuation part. Thus, the calibration force may be increased by introducing a second calibration device. The calibration system may comprise three or more calibration devices, or a plurality of calibration devices. Any one of the second, third and fourth calibration devices may have the same technical features as the first calibration device.

The removeable force application part may be one or more elements that are configured to apply a first calibration force to the first container.

The removeable force application part may be configured to be connected with an upper part of the first container of the weighing system.

The removeable force application part may be in the form of a clamp that may be configured to be clamped to an existing part of the first container of the weighing system. Thus, the clamp may e.g. be configured to be clamped to the outlet of the container. In that way, an existing part of the container may be utilized to attach the removable force application part of the calibration system without having to permanently modify the container of the weighing system.

In one exemplary embodiment, the force application of the first calibration device and the second calibration device may be synchronised, so that the first calibration force and the second calibration force are applied simultaneously.

In one exemplary embodiment of the present disclosure, the second calibration device may be connected with the removeable force application part. By connecting the second calibration device with the removeable force application part, the first calibration device and the second calibration device may apply an increased force to the removeable force application part, thereby increasing the force that the removeable force application part can apply to the weighing system. The first and second calibration devices may be configured to provide a tension force to the force application part in a direction towards the base, and where the force may be transferred to the weighing device. The first and second calibration devices may be configured to provide a tension force where the first force application axis of the first calibration device is substantially parallel to a second force application axis of the second calibration device. The calibration force may have a third force application axis that is parallel to the first force application axis and the second force application axis. The third force application axis of the force application device may be substantially vertical (in the direction of gravity), the second force application axis of the second calibration device may be substantially vertical, and/or the first force application axis of the first calibration device may be substantially vertical.

In one exemplary embodiment of the present disclosure, the first calibration device may provide a first part of the first calibration force applied via the first force application surface, and the second calibration device may provide a second part of the first calibration force via the first force application surface. Thus, the first calibration device and the second calibration device are configured to provide at least part of the first calibration force to the weighing system. In an example where the calibration system comprises a first calibration device and a second calibration device, the force applied via each of the calibration devices may be aggregated to a first calibration force, as both calibration devices apply the force via the same force application surface.

In one exemplary embodiment of the present disclosure, the first calibration device may be connected with the force application part on one side of the force application surface, and the second calibration part may be connected with the force application part on an opposite side of the force application surface. Thus, the first calibration device and the second calibration device may be mechanically coupled with the force application part, and where first calibration force and the second application force may be provided on each side of the force application surface. This will allow a force vector of the force application surface to be substantially parallel to the force vector of the first calibration force and the second calibration force when the first calibration force and the second calibration force are substantially equal to each other.

In one embodiment of the present disclosure, the first force application axis and/or the second force application axis may be arranged on either side of a weighing device force application axis. The first force application axis, the second force application axis and the weighing device force application axis may be parallel to each other and may extend substantially so that each force application axis intersects a straight line, extending orthogonally to each of the force application axes.

The force application part may have a force application surface which is positioned substantially equidistally (equidistantly) from the connection of the first calibration device and the second calibration device, so that when a calibration force is applied via the first calibration device and the second calibration device, the force application part will have equal force applied via the calibration devices, resulting in an even application of calibration force to the weighing device, and where the opposing levers of the force application part will be equally long from the force application surface, thereby ensuring uniform application of the calibration force to the weighing device.

In one exemplary embodiment of the present disclosure, the force application part may be a rigid elongated member that has a length that is longer than the diameter and/or the width of the weighing system. This allows the force application part to extend outwardly from the weighing system, so that the first end and/or the second end of the elongated member may be configured to extend in a vertical direction away from the weighing system. Thus, the calibration device(s) may be positioned to the side of the weighing device, extending from the base to the force application part, and where the calibration device(s) is(are) positioned outside the outermost perimeter of the weighing device.

In one exemplary embodiment of the present disclosure, the first calibration force may be configured to be applied in a direction away from the force application surface. Thus, the first calibration force may extend in a direction that is away from the force application surface, where at least 90% of the calibration force applied to the weighing device is in a direction that is parallel or coaxial to the force application axis of the weighing device. The first calibration force applied via the force application surface may be directed in the direction of gravity, and where the force application part and/or the force application surface are(is) arranged on an opposite side of the weighing device and configured to provide a pushing force to the weighing device. The first calibration device may provide a pulling force to the force application part, where the force application part may provide a pushing force to the weighing device. Thus, the calibration devices may provide a tension force between the base and the force application part, while the force application part may provide a compression force between the force application part and the base.

In one exemplary embodiment of the present disclosure, the base part is a removeable base part having a second force application surface arranged opposite the first force application surface. Thus, the first force application part and the second force application part may be positioned on opposite sides of the weighing device, in a vertical direction, so that the first force application part and the second force application part are pulled towards each other, thereby providing a compression force to the weighing system and/or the load cells of the weighing system.

The calibration system may be configured to emulate the force of gravity applied via a substance applied in the container and/or tank of the weighing system.

The first calibration device may have a first force actuation part that is hydraulic, so that the actuation device is a hydraulic device configured to apply the first calibration force. The hydraulic device may be connected to a hydraulic pump, where the hydraulic pump may be connected to two or more hydraulic devices and apply an equal hydraulic force to the two or more hydraulic devices. Thus, when there are two or more hydraulic devices, each device may provide an equal calibration force. As an example, if a first calibration device provides a calibration force of 1 kN, the second calibration device may also provide a calibration force of 1 kN.

The present disclosure may also relate to a calibration assembly comprising a calibration system in accordance with the present disclosure and a weighing system, where the weighing system comprises a first weighing load cell and a first container configured to hold a first substance to be weighed by the first weighing load cell.

### Brief description of the drawings

The following is an explanation of exemplary embodiments with reference to the drawings, in which:
Fig. 1 is a schematic front view of one embodiment of a calibration system in accordance with the present disclosure,
Fig. 2 is a schematic front view of a second embodiment of a calibration system in accordance with the present disclosure, and
Fig. 3 is a schematic front view of one embodiment of a calibration system in accordance with the present disclosure.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practised in any other embodiments even if not so illustrated, or if not so explicitly described.

The use of the terms *"*first*"*, *"*second*"*, *"*third*"* and *"*fourth*"*, *"*primary*"*, *"*secondary*"*, *"*tertiary*"*, etc., does not imply any particular order, but the terms are included to identify individual elements. Moreover, the use of the terms *"*first*"*, *"*second*"*, *"*third*"* and *"*fourth*"*, *"*primary*"*, *"*secondary*"*, *"*tertiary*"*, etc., does not denote any order or importance, but rather the terms *"*first*"*, *"*second*"*, *"*third*"* and *"*fourth*"*, *"*primary*"*, *"*secondary*"*, *"*tertiary*"*, etc., are used to distinguish one element from another. Note that the words *"*first*"*, *"*second*"*, *"*third*"* and *"*fourth*"*, *"*primary*"*, *"*secondary*"*, *"*tertiary*"*, etc., are used here and elsewhere for labelling purposes only and are not intended to denote any specific spatial or temporal ordering.

Furthermore, the labelling of a first element does not imply the presence of a second element and vice versa.

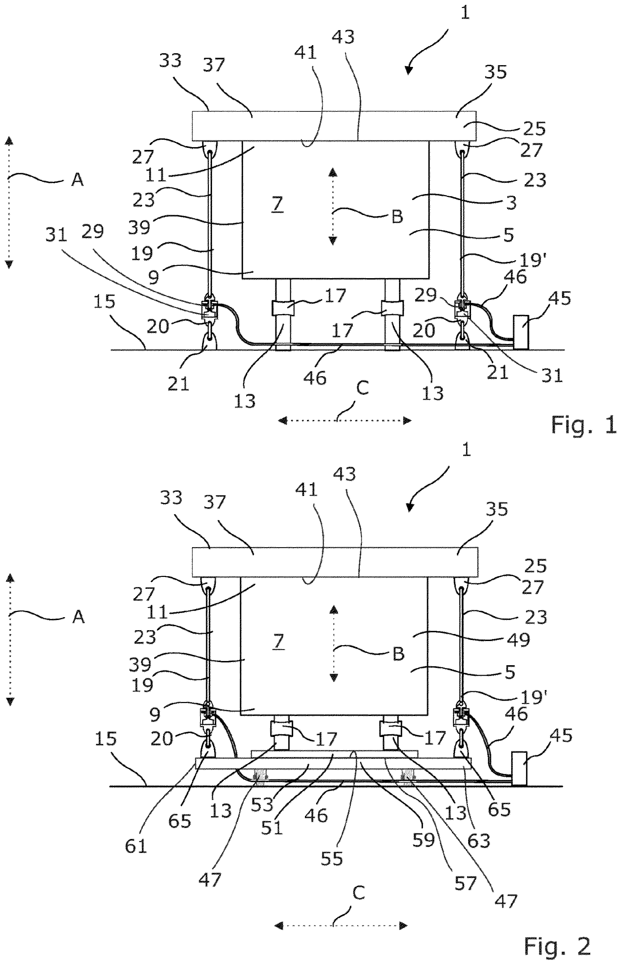

Fig. 1 is a schematic front view of a calibration system 1 which is to be used to calibrate a weighing system 3 in accordance with the present disclosure. The weighing system 3 comprises a container 5 to hold a substance 7, where the container has an upper part 9 and a lower part 11, where the lower part 11 comprises supporting legs 13 that may fix the container 5 to a base 15 (or a foundation). The weighing system 3 may comprise one or more weighing devices 17, such as load cells 17, which are capable of registering the weight of the substance 7 inside the container 5. The load cells 17 are positioned between the container 5 and the base 15, where any change in weight of the substance 7 inside the container 5 may be registered and monitored by the load cells 17. The load cells 17 may be connected to monitoring equipment (not shown) allowing users to register and monitor the current weight of the substance 7 and to monitor and register any changes in the weight of the substance 7 inside the container.

However, the weighing system 3 has to be calibrated at regular intervals in order to ensure that the weighing system is accurate and that the users can rely on the readings of the load cells at any point in time. Such calibration may be very time-consuming and costly, as some calibration methods require the container to be emptied, cleaned and filled up with a known substance to be able to accurately calibrate the load cells of the weighing system. Other calibration systems require that the container 5 is modified by providing one or more attachment elements on the container in order to attach a calibration device to the tank to provide a calibration force between the tank and the base. In an existing environment, this may be very expensive, as each tank has to be emptied prior to modification, and an attachment element has to be welded or at least securely attached to the tank in order to withstand the calibration force applied via calibration devices.

However, for the present disclosure, the solution does not require any modification to the tanks and the system can be mounted on any tank without any need to empty or modify the tank. The calibration system 1 according to the present disclosure may comprise one or more calibration devices 19, where a first end 20 of each calibration device 19 is connected to the base 15 via a first attachment part 21, and a second end 23 of each calibration device 19 is connected to a force application part 25 via a second attachment part 27. The calibration device 19 may comprise a first force actuation part 29 configured to provide a first calibration force A, where the calibration device provides a tension force between the force application part 25 and the base 15. The first calibration force A may be registered by a load cell 31 which is arranged in connection with the calibration device 19, which registers the magnitude of the force applied via the calibration device between the base 15 and the force application part 25. Thus, the base 15 provides a counterforce to the force applied to the force application part 25, where the base 15 may be seen as a static part, and the force application part 25 may be seen as a dynamic part.

In the embodiment shown in Fig. 1, the force application part 25 may be a removeable force application part 25, where the force application part has a first end 33 and a second end 35 and is in the form of an elongated member 37 extending beyond an outer periphery 39 of the container 5 in a horizontal direction B, so that each end 33, 35 extends beyond the outer periphery 39 of the container 5 in the horizontal direction B. The force application part 25 may have a first force application surface 41 which is aligned with the container 5 along an upper surface 43 of the container 5 in order to transmit the first calibration force A into the weighing system 3 via the container 5. Thus, the first calibration force A is registered by the load cells 17 of the weighing system 3 as an increase in weight of the container 5, without altering the weight of the substance 7 inside the container 5.

In this embodiment, the calibration system 1 comprises a first calibration device 19 and a second calibration device 19', which may be identical to each other, where each of the calibration devices 19, 19' is connected to each end 33, 35 of the elongated member 37, and where the force application surface 41 is arranged in an area between each end 33, 35 of the elongated member 37.

Thus, when a calibration is to be performed on the weighing system 3, the first and second calibration devices 19, 19' may be attached to the base 15, the removeable force application part may be positioned on the upper surface 43 of the container 5, and the calibration devices 19, 19' may be connected to the force application part 25. Subsequently, all slack is removed from the calibration devices 19, 19 between the base 15 and the force application part 25. Then the load cells 17 of the weighing system 3 are zeroed, the load cells 31 of the calibration device are zeroed, and a hydraulic pump 45 may apply a hydraulic force via hydraulic lines 46 to the force actuation part 29, thereby providing a tension force A between the removeable force application part 25 and the base 15. The tension force A is transferred to the container via the force application surface 41 and the upper surface 43 of the tank, and the tension force A is registered as a compression force C in the load cells 17 of the weighing system 3. By providing such a calibration system 1, the first force registered by the load cell 31 of the first calibration device 19 and the second force registered by the load cell 31 of the second calibration device 19' may be registered as a tank calibration force,
which is registered by the load cells 17 of the weighing system at a 1:1 rate. Thus, if a force of 1 kN is applied via the calibration devices 19, 19', the load cells 17 of the weighing system 3 are to register 1 kN of increased force, and if they do not do that, the load cells 17 have to be calibrated to show the register the correct force. Thus, the calibration system 1 is capable of applying a calibration force at a scale of 1:1 to the weighing system 3 for calibration purposes.

It is to be understood that the tanks or containers 5 are of different sizes and shapes, and the first force application surface 41 may be adjusted to each specific tank in order to allow the calibration force A to be applied to a container of a weighing system 1.

Fig. 2 shows a calibration system 1 and a weighing system 49 similar to that shown in Fig. 1, with the exception that the weighing system 3 is on wheels 47 and may be seen as a mobile weighing system 49. The weighing system 49 comprises a container 5, configured to hold a substance 7, as well as support legs 13 and load cells 17. However, this weighing system 49 comprises a chassis 51 arranged between the wheels 47 and the supporting legs 13, where the chassis 51 may be a rigid frame that supports the entire weight of the weighing system 49 above the chassis 51.

The wheels 47 of the weighing system 49 may be made of an elastomeric material, which makes it easy to roll the weighing system 49 from one position to another. However, as the elastomeric material of the wheels connecting the weighing system 49 to the ground may absorb force, the calibration system may further comprise a second force application part 53 which may have a second force application surface 55, where the second force application part 53 may be aligned with a lower surface 57 of the chassis 51, and where the second force application part 53 may act as a base 15' providing a counterforce for the calibration devices 19, 19'via first attachment parts 65 attached to the second force application part 53. The second force application part 53 may be in the form of an elongated member 59 extending beyond the outer periphery 39 of the container 5 in a horizontal direction B, so that each end 61, 63 extends beyond the outer periphery 39 of the container 5 in the horizontal direction B. The second force application part 53 may have a first force application surface 55 which is aligned with the chassis 51 along a lower surface 57 of the chassis 51 in order to transmit the first calibration force A into the weighing system 49 via the container chassis 51. Thus, the first calibration force A may be registered by the load cells 17 of the weighing system 3 as an increase in weight of the container 5 without altering the weight of the substance 7 inside the container 5.

Consequently, the calibration may be performed as shown in the embodiment in Fig. 1, where the force application part 25 and the second force application part 53 transfer the calibration force into the weighing system, where the chassis and the second force application part 53 provide the counterforce to the force application part 25 and the container.

It is to be understood that the weighing system 49 may be calibrated using the calibration system 1 seen in Fig. 1, where the chassis may be elevated from the base 15 by providing a rigid block or elevation of the chassis 51, thereby ensuring that the calibration force is not transmitted to the elastic part of the wheels 47.

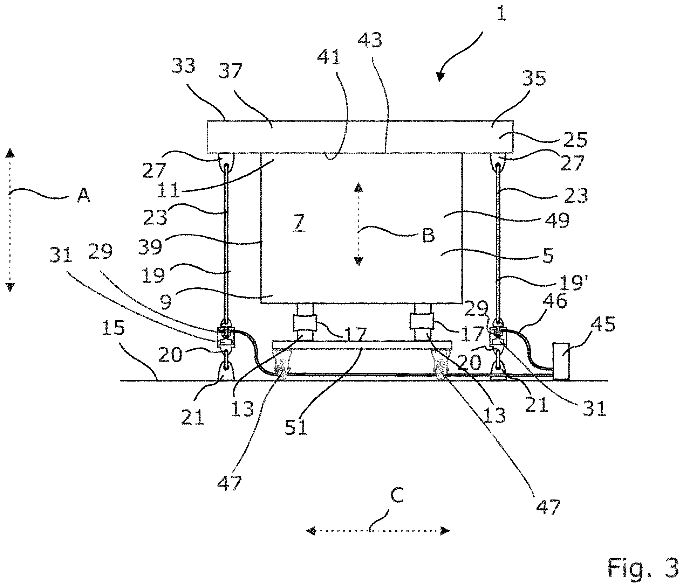

Fig. 3 shows an embodiment of the present disclosure where a mobile weighing system 49 as shown in Fig. 2 may be introduced into the embodiment of the calibration system as shown in Fig. 1. Thus, the mobile weighing system 49 may be introduced in between the first attachment parts 21 that are attached to the foundation, base or floor of a site, and where the force application part 25 is connected to the base 15 via the first 19 and the second calibration device 19'. Thus, when a first calibration force A is applied to the force application part 25, the force application part compresses the weighing system 49 between the force application part 25 and the base 15 (floor). Consequently, when the wheels 47 have been compressed to their full compression, the first calibration force A will be registered by the load cells 17 of the weighing system 49, and the calibration force registered by the load cells 31 of the calibration device may be compared to the force registered by the load cells 17 of the weighing system 49, allowing the weighing system 49 to be calibrated.

Thus, when the weighing system 49 has been calibrated, the calibration force may be released, and the weighing system may be rolled via the wheels 47 away from the calibration system, after which the next weighing system may occupy the space which was occupied by the weighing system shown in Fig. 3.

The embodiment of the calibration system shown in Fig. 1 and Fig. 3 may be seen as a weighing station, where mobile weighing systems 49 may be introduced into the position of the calibration device 1 and calibrated one at a time.

It is to be noted that the word *"*comprising*"* does not necessarily exclude the presence of other elements or steps than those listed.

It is to be noted that the words *"*a*"* or *"*an*"* preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Calibration system
- 3: Weighing system
- 5: Container
- 7: Substance
- 9: Upper part of container
- 11: Lower part of container
- 13: Supporting legs
- 15: Base
- 17: Weighing system load cell
- 19: First calibration device
- 19': Second calibration device
- 20: First end of calibration device
- 21: First attachment part
- 23: Second end of calibration device
- 25: Force application part
- 27: Second attachment part
- 29: First force actuation part
- 31: Load cell
- 33: First end of force application part
- 35: Second end of force application part
- 37: Elongated member
- 39: Outer periphery of container
- 41: Force application surface
- 43: Upper surface of container
- 45: Hydraulic pump
- 46: Hydraulic lines
- 47: Wheels
- 49: Weighing system
- 51: Chassis
- 53: Second force application part
- 55: Second force application surface
- 57: Lower surface of chassis
- 59: Elongated member
- 61: First end of second force application part
- 63: Second end of second force application part
- 65: First attachment part of second force application part
- A: First calibration force
- B: Horizontal direction
- C: Compression force

## Claims

1. A calibration system for a weighing system, where the weighing system comprises a first weighing load cell and a first container configured to hold a first substance to be weighed by the first weighing load cell, the calibration system comprising:
- a first calibration device comprising a first force actuation part configured to provide a first calibration force in the direction of gravity and a first calibration load cell configured to measure the first calibration force,
- a base part configured to provide a first counterforce in a direction opposite to the first calibration force applied via the first calibration device, and
- a removeable force application part being connected with the first calibration device and having a force application surface, where the force application part is configured to be aligned with at least a part of the weighing system in order to apply the first calibration force to the first container via the first force application surface and to transfer the first calibration force to the first weighing load cell.

2. A calibration system in accordance with claim 1, wherein the calibration system comprises at least a second calibration device.

3. A calibration system in accordance with claim 2, wherein the second calibration device is connected with the removeable force application part.

4. A calibration system in accordance with claim 2, wherein the first calibration device provides a first part of the first calibration force applied via the first force application surface, and the second calibration device provides a second part of the first calibration force via the first force application surface.

5. A calibration system in accordance with claim 2, wherein the first calibration device is connected with the force application part on one side of the force application surface, and the second calibration part is connected with the force application part on an opposite side of the force application surface.

6. A calibration system in accordance with claim 2, wherein the force application of the first calibration device and the second calibration device is configured to be synchronised.

7. A calibration system in accordance with claim 2, wherein a first force application axis and/or a second force application axis are(is) arranged on either side of a weighing device force application axis.

8. A calibration system in accordance with any of the preceding claims, wherein the first calibration force is configured to be applied in a direction away from the force application surface.

9. A calibration system in accordance with any of the preceding claims, wherein the force application part is a rigid elongated member that has a length that is longer than the diameter and/or the width of the weighing system.

10. A calibration system in accordance with any of the preceding claims, wherein the force application surface may be one or more surface areas that are in contact directly or indirectly with the weighing system, or are in contact directly or indirectly with the container or tank of a weighing system.

11. A calibration system in accordance with any of the preceding claims, wherein the base part is a removeable base part and has a second force application surface arranged opposite the first force application surface.

12. A calibration assembly comprising a calibration system in accordance with any of the preceding claims and a weighing system, where the weighing system comprises a first weighing load cell and a first container configured to hold a first substance to be weighed by the first weighing load cell.
